# EUROPEAN PATENT APPLICATION

(11) **EP 4 681 894 A1**
(43) Date of publication of application: **21.01.2026**
(21) Application number: 25189632.0
(22) Date of filing: 15.07.2025
(51) Int. Cl.: B25J 19/00, B65H 3/22, D06F 67/04, D06F 95/00

(54) **TEXTILE GRIPPER**

(30) Priority: 15.07.2024 NL 2038227
(71) Applicant: Van Remundt Beheer B.V., 2408 AP Alphen Aan Den Rijn (NL)
(72) Inventor: VAN REMUNDT, Nicolaas Hyacinthus Maria, 2401 LP ALPHEN AAN DEN RIJN (NL)
(74) Representative: EP&C

(57) **Abstract**

Textile gripper for handling laundry, e.g. in a collection or dispensing system, comprising a mounting section configured to be attached to a gripper mover to move the textile gripper between at least a laundry input position and a laundry output position; a gripping section attached to the mounting section and comprising a first gripping member having a first gripping surface that is rotatable about a first rotation axis and a second gripping member having a second gripping surface that is rotatable about a second rotation axis; and a drive unit coupled to the gripping section and configured to drive the first gripping member and the second gripping member with respect to each other; wherein the first gripping member and the second gripping member are counter-rotatable in opposite directions with respect to each other, such that the counter-rotation allows a piece of laundry to be gripped between the first and second surfaces, characterised in that the gripping members are provided with one or more protruding gripping elements that extend radially outwards from the first and/or second gripping surface, that are arranged to engage with the fabric of a laundry piece and are configured to, with the counter-rotation, provide a wrinkle in the fabric that is gripped between the first and second surfaces.

## Description

### Field of the invention

The present invention relates to a textile gripper for handling laundry, a laundry handling system and a method for gripping laundry using the textile gripper.

### Background of the invention

For handling laundry it can be advantageous to grip laundry in order to move the laundry between input and output positions. For example, when sorting laundry, it can be advantageous to grip pieces of laundry individually to sort the specific pieces in dependence of individual properties, e.g. according to their RFID information. Furthermore, when dispensing laundry, e.g. when dispensing uniforms in a hospital, it can be advantageous that specific types and pieces of laundry are dispensed in specific amounts to a worker.

For example, ITUB20154610 discloses a machine for dispensing clothing comprising a gripping device configured to take at least one garment at a time from a storage compartment. The gripping device comprises rollers that are rotatable by brushless electric motors. For dispensing, the rollers are positioned on a flat surface of neatly folded staple of clothing, after which rollers are rotated and a friction force is applied to a flap of clothing to grip the clothing.

US5248177A discloses a pickup device comprising a pair of jaws that are pivotable about a pivot axis on one outer end. The other outer end of the jaws includes a fabric contact surface that grips a fabric by rotation about the pivot axis.

WO2021130282A1 discloses a gripping device for a robot having gripping fingers that are moved parallel towards each other. The distal ends of the gripping fingers are provided with jaws that are rotatably mounted which are fixed via torsion springs to prevent unwanted rotation of the jaws.

US2021078184 discloses a method for gripping, moving and releasing a piece of cloth with a gripper comprising two conveyor belt loops that rotate in an endless loop and are drive in opposed directions to grip a piece of cloth.

However, it has been found that the known textile grippers are able to grip laundry with a limited effectivity. Known grippers require a relatively neatly folded staple of laundry in order for the gripping to succeed. Further, the rollers may need to be provided with a special coating or material in order to obtain the required friction.

Known grippers need to be designed to the specific type of laundry that is expected. In case the laundry is changed or the type of laundry varies, it has been found that the known textile grippers do not function satisfactory.

It has been found that various properties, e.g. type of laundry, model, fabric thickness and material, pockets, seams, buttons and stains may all influence the friction and therewith the gripping result. Even positioning and environmental influences may change the friction and thereby cause variation in gripping result, rendering the known grippers relatively unsatisfactory, especially in conditions with unpredictable friction, e.g. in varying and/or dirty laundry.

As a result, multiple tries are necessary before a single piece of laundry is gripped properly and handling laundry requires a relatively large amount of time. For example, a single gripper may try to grip laundry, after which sensors are required to determine whether laundry is gripped at all, and if laundry has indeed been gripped, whether the desired amount of laundry is gripped, e.g. a single piece, after which repetition of the process may be necessary.

As an alternative, it has been found that multiple grippers of a claw-type may be used, which need to be arranged in series, such laundry is first gripped by a first gripper, and subsequently by a second gripper from a different angle, etc. It has been found that this way, each subsequent gripper reduces the chance of gripping multiple pieces of laundry at once. However, each subsequent gripper increases required space for the device, required handling time and the chance of gripping no laundry, and still multiple pieces may be gripped.

### Object of the invention

It is therefore an object of the present invention to provide a textile gripper that at least partially overcomes the disadvantages of the prior art or to provide an alternative textile gripper, for example a textile gripper that that provides an improved gripping result even with varying friction between the gripper and the laundry, e.g. with varying clothing types, with laundry not provided on a neatly folded staple and/or with dirty laundry, a textile gripper that requires less gripping tries and/or a textile gripper that has a higher chance of gripping a desired amount of laundry, e.g. to grip a single piece of laundry.

### Description of the invention

The present invention provides a textile gripper according to claim 1. The textile gripper is suited for handling laundry, e.g. in a laundry collection or laundry dispensing system, and comprises a mounting section configured to be attached to a gripper mover to move the textile gripper between at least a laundry input position and a laundry output position.

The textile gripper further comprises a gripping section attached to the mounting section and comprising a first gripping member having a first gripping surface that is rotatable about a first rotation axis and a second gripping member having a second gripping surface that is rotatable about a second rotation axis; and a drive unit coupled to the gripping section and configured to drive the first gripping member and the second gripping member with respect to each other.

The drive unit may be configured to rotate the first gripping member and/or the second gripping member. The drive unit may be configured to move the first gripping member and/or the second gripping member towards each other, e.g. during the counter-rotation thereof. The first griping member and the second gripping member may each be rotatable about their own respective rotation axis.

In particular, the drive unit may be configured to move the first gripping member and/or the second gripping member towards each other while rotating the first gripping member and/or the second gripping member.

The first gripping member and the second gripping member are counter-rotatable in opposite directions with respect to each other, such that the counter-rotation allows a piece of laundry to be gripped between the first and second surfaces.

The gripping members are provided with one or more protruding gripping elements that extend radially outwards from the first and/or second gripping surface, that are arranged to engage with the fabric of a laundry piece and are configured to, with the counter-rotation, provide a wrinkle in the laundry to be gripped between the first and second surfaces.

Therewith, gripping may be provided by the gripping elements protruding into a piece of laundry to be gripped, i.e. deforming the piece of laundry to be gripped. As a result, the gripping force does no longer solely depend on a friction between two relatively flat surfaces, i.e. neatly folded clothing and a roller, such as in the prior art. On the contrary, deformation of the piece of clothing to be gripped, into the surface thereof, i.e. due to the gripping elements protruding therein, now contributes to the gripping force.

As a result, the invention allows to provide a wrinkle in the fabric, and therewith to grip the laundry via the wrinkle, relatively less dependent on friction between the gripping member and the laundry, and relatively less dependent on factors that may influence that friction, compared to the prior art. This provides several advantages:
First of all, the textile gripper provides an improved gripping result with friction forces that vary from piece of laundry to another. As such, the invention may be especially advantageous for gripping varying clothing types, for gripping laundry not provided on a neatly folded staple and/or for gripping dirty laundry.

Secondly, the textile gripper may now require less gripping tries before a piece of laundry is gripped successfully; and/or
the textile gripper that has a higher chance of gripping a desired amount of laundry, e.g. to grip a single piece of laundry, compared to the prior art.

The textile gripper is suitable for handling laundry, e.g. for picking up a piece of laundry in the input position and depositing the piece of laundry in the output position.

Textiles, as used herein, is understood as any type of clothing or fabric, being from fibres-like materials, e.g. fibres, yarns, filaments, threads, etc. that are made through weaving, sewing, stitching, knitting or any other technique.

Multiple input and/or output positions may be provided, wherein the gripper mover is configured to move the textile gripper to a selected one of the input and/or output positions, e.g. for sorting the laundry. The textile gripper may be arranged on a dirty laundry handling device.

The mounting section may be adapted to be compatible with mounting sections of known textile grippers in order to allow for convenient mounting. The gripper mover may be configured to move the textile gripper above the input and/or output position, e.g. in a horizontal and/or vertical direction. The mounting section may comprise a mounting surface for engaging with the gripper mover, for example via a shape lock, via a snap fit, bolts, pins, glue, screws, etc and/or via a force lock, e.g. by being clamped.

The gripping section may be integral with the mounting section and for example be arranged on an opposite outer end of the gripper. The gripping section may at least partially house the drive unit. The gripping section may comprise a third and/or fourth gripping member.

The drive unit may be configured to drive the first gripping member with respect to the second gripping member, vice versa, or drive both gripping members. A speed of the counter-rotation may be adjustable, e.g. in dependence of properties of the environment or laundry to be gripped.

The gripping elements may protrude perpendicular from the gripping surface and/or skewed thereto, e.g. a longitudinal axis of each gripping element may have an angle of 0-180 degrees with the gripping surface, for example 75-105 degrees with the gripping surface, such as approximately 90 degrees.

All of the gripping members may be provided with at least one or multiple gripping elements. The gripping elements are configured to, with the counter-rotation, engage, i.e. come into contact with, the piece of laundry to be gripped, for example with an exposed upper surface thereof. The term laundry piece as used herein means a single piece of laundry to be gripped.

The gripping elements may be configured to, upon coming into contact with the laundry piece, exert a wrinkling force on the laundry piece in addition to the friction force. The wrinkling force may be a force substantially within the fabric, i.e. acting between an upper surface and a lower surface thereof, instead of on the upper surface thereof. The wrinkling force may be acting in the plane of the fabric of the laundry piece and/or a force acting in upward direction with respect to the plane of the fabric, in contrast with a friction force that is acting on an upper surface plane of the fabric. The plane of the fabric may be understood as a plane between the upper surface plane and the bottom surface plane of the fabric. The gripping elements may be configured to deform the fabric such that in the upper surface side surface sections are formed. The gripping elements may be configured to, with the counter-rotation, exert a wrinkling force on a side surface section of the fabric, in contrast with a friction force that would normally be exerted on a top surface of the fabric only.

The first rotation axis and the second rotation axis may be aligned with each other, e.g. in parallel. The textile gripper may be configured to output a gripped laundry piece by rotating the first gripping member and second gripping member in respective directions opposite to the counter-rotation. The first and/or second gripping surface may be substantially cylindrical. In addition to the gripping elements, the first and/or second gripping surface may comprise a coating, and/or a microscopically or macroscopically structured surface.

In an embodiment, the gripping elements are configured to at least partially protrude into the fabric of a laundry piece. It has been found that by actually protruding into the fabric, a wrinkling force may be provided from within the fabric, rather than from a side surface section of the fabric. The gripping elements may comprise a pricking section configured to prick into a fabric of a laundry piece. Additionally or alternatively, a force and/or movement of the gripper with respect to the laundry piece may be adjusted to obtain a desired amount of protrusion.

The gripping elements may be configured to deform the fabric within a plane of the fabric, e.g. to provide room for the gripping elements.

The gripping elements be substantially cylindrical and for example comprise a circular or oval cross section. The gripping elements may all have the same dimensions or varying dimensions. An outer contour of the gripping elements may be relatively small. It has been found that this way, wear of the fabric due to subsequent deformation during gripping may be reduced. An outer diameter of the gripping elements may e.g. be less than 4 mm, for example less than 2,5 mm. It has been found that such dimensions may surprisingly contribute higher chance of gripping a desired amount of laundry, e.g. to grip a single piece of laundry.

A length of the gripping elements may be relatively small. A length of the gripping elements may be adjustable and/or the gripping elements may be releasably attached to the gripping members. This way, the gripping elements may be adapted, e.g. be replaced, to the circumstances. Further, a relatively short length may advantageously enable gripping a wrinkle in a single layer of fabric, rather than in multiple layers of fabric underneath each other. As such, the chances of gripping a single laundry piece may be increased.

A protruding length of the gripping elements may e.g. be less than 4 mm, such as less than 2,5 mm. It has been found that such dimensions may surprisingly contribute higher chance of gripping a desired amount of laundry, e.g. to grip a single piece of laundry.

A total length of the protruding elements may be larger than the protruding length. The first and second gripping member may for example comprise one or more element slots.

In an embodiment, the gripping elements, towards their respective radial outer ends, comprise a pointed section. The pointed section may for example be conical or frustoconical. A height of the pointed section may e.g. be equal to the protruding length, e.g. be less than 4 mm, such as less than 2,5 mm. It has been found that such dimensions may surprisingly contribute higher chance of gripping a desired amount of laundry, e.g. to grip a single piece of laundry.

In an embodiment, the drive unit is configured to adjust a distance between the first and the second rotation axes to move the gripper between a gripping state, in which the first and second rotation axes are arranged closest to each other, and an open state, in which the respective rotation axes are arranged further away from each other. It has been found that by adjusting a distance between the rotation axes, the degree of protrusion of the gripping elements into the fabric and/or the force exerted by the gripping elements on the fabric may be controlled. This way, gripping may be made more secure, whereas the risk of not or insufficiently releasing a clothing piece is reduced.

In the gripping state, a distance between the first gripping surface and the second gripping surface may for example be approximately equal to a protruding length of the gripping elements, for example with the addition of a small space margin. The distance may e.g. be less than 5 mm, such as less than 4 mm in the gripping state.

In an embodiment, the drive unit is configured to adjust the distance between the first and the second rotation axes during the counter-rotation of the first gripping member and/or the second gripping member, such that when moving towards the gripping state, the first and/or second gripping surfaces are moved towards each other and vice versa.

It has been found that by combining counter-rotation and distance adjustment of the gripping members with their gripping elements, a movement speed of the gripping elements with respect to a laundry piece may be higher compared to counter-rotation or distance adjustment alone. As such, it has been found that a wrinkle may be provided relatively fast and/or more certain. The drive unit may be configured to roll the respective gripping members towards each other.

The drive unt may be configured to, e.g. when the gripper is arranged in the laundry input position on a laundry piece, move the first and second rotation axes towards each other while rotating, e.g. counter-rotating, the respective gripping surfaces in opposite directions towards each other into a gripping state and, e.g. when the gripper is arranged in the laundry output position, move the first and second rotation axes away from each other while rotating, e.g. counter-rotating, the respective gripping surfaces in opposite directions away from each other into the open state.

By combining the distance adjustment and rotation, e.g. counter-rotation gripping and/or releasing provided relatively fast and/or more certain.

In an embodiment, the drive unit comprises a gear mechanism, wherein the gear mechanism is arranged recessed in the first and/or second gripping member with respect to the first and/or second gripping surface, respectively. By having a gear mechanism, various transmissions ratios and movements may be achieved and no direct drive of the gripping members via an motor, e.g. an electoral motor, is necessary, such that the gripper may be more compact and a relatively firm grip may be obtained.

The combined counter-rotation and distance adjustment of the gripping members with their elements may be performed by the gear mechanism.

The drive unit may be configured to induce a roll movement of the gripping members with respect to the mounting sections, e.g. wherein the respective gripping surfaces have a substantially cylindrical shape.

In an embodiment, the drive unit comprises a rack and pinion, and wherein the drive unit is configured to move the gripping member via the rack and pinion. The drive unit may drive the rack and/or the pinion, wherein the pinion or the rack, respectively, is coupled with the first and/or second gripping member.

In an embodiment, the rack is mounted stationary to the mounting section, and the pinion is rotatably mounted to the first and/or second rotation axis and coupled to the first and/or second gripping member to transfer a movement from the drive unit towards the first and/or second gripping surface.

The rack may be curved, such that the respective gripping member, when moving and rotating along the rack with the respective pinion, follows a curved trajectory, e.g. such that the first and/or second rotation axis is configure to follow a curved trajectory when the gripper is moving between the open state and the gripping state. The trajectory may curved such that when the gripper is positioned above a laundry piece, the first and/or second gripping members are moved towards each other and towards the laundry piece during the counter-rotation.

In an embodiment, the drive mechanism comprises a drive gear, e.g. a pinion, arranged adjacent to the first and/or second gripping member to drive the respective gripping member. The way, the movement from the drive gear may be transferred directly to the rotation axis, e.g. the drive gear may be connected to the respective rotation axis.

In a further embodiment, the drive gear is partially recessed in the first and/or second gripping member with respect to the first and/or second gripping surface, respectively, such that an effective teeth radius of the gear mechanism is smaller than an average outer radius of the first and/or second gripping surface. The drive gear may be the pinion moving past the rack.

It has been found that this way, the gripping elements protrude with respect to the drive gear, such that a rotation speed of the gripping elements may be relatively high with respect to a rotation speed of the drive gear, e.g. when the drive gear is moved across the rack. The high rotation speed may contribute to wrinkling and therewith to relatively fast and secure gripping of a laundry piece.

In particular, the relatively fast movement of the gripping elements may cause a top fabric layer of the laundry piece to shift with respect to underlying fabric layers. It appears that the relatively high movement speed of the gripping elements contributes to a higher chance of gripping a desired amount of laundry, e.g. to grip a single piece of laundry, possibly as a result of difference between a dynamic friction coefficient of the top fabric layer compared to static friction coefficients of underlying fabric layers of laundry, which may contribute to a wrinkle being formed in the top fabric layer of the laundry only, and thus to grip the wrinkle in the top layer and thereby grip a single laundry piece.

In an embodiment, the first and second gripping member each comprise multiple gripping elements extending from the respective gripping surface. By having multiple gripping elements, the force exerted on the fabric of a laundry piece may be higher, such that the formation of a wrinkle and/or the gripping of the formed wrinkle may be more reliable and/or fast.

In an embodiment, the gripping elements are arranged such that, in the gripping state, the gripping elements of the first and second gripping member are interleaved with each other. The gripping elements may be arranged on such that, when in the gripping state, the gripping elements protruding from the first gripping member are arranged in between gripping elements protruding from the second gripping member and/or vice versa. This way, the deformation of the laundry piece between the gripping elements is relatively large, such that a relatively high gripping force may be obtained.

In an embodiment, at least two of the gripping elements are, in a rotation direction about the first and/or second rotation axis, arranged in line with each other. It has been found that this way, the formation of wrinkles in the rotation direction is promoted, such that gripping may be performed faster and/or more reliable, whereas on the other hand the occurrence of stresses in the fabric in other directions, e.g. directions transverse to the counter-rotation direction, is reduced.

In a further embodiment, the gripping elements are arranged in rows of in-line gripping elements. The rows may be arranged next to each other in a direction parallel to the rotation axis. The rows may be symmetrical to each other. One or multiple rows may be provided on a single gripping member, for example two rows. By having multiple rows, the force exerted on the fabric of a laundry piece is spread out over the multiple rows, such that the chance of damage of the fabric of the laundry piece can be further reduced and/or a larger gripping force may be exerted.

In an embodiment, the drive unit comprises a longitudinal actuator that is rotatably mounted between the mounting section and the gripping section, wherein the drive unit is configured to move the first and/or second gripping members between the gripping state and the open state by actuation of the longitudinal actuator. This way movement between the open state and the gripping state may be induced by a linear actuation movement. This way, compactness and reliability of the gripper may be improved. The longitudinal actuator may be any actuator configured to change in length upon actuation. For example, a hydraulic, pneumatic or electric cylinder.

In an embodiment, the drive unit comprises a rotatable arm that is rotatably mounted to the gripping section via the longitudinal actuator and that extends towards the first and/or second gripping member, wherein the longitudinal actuator is configured to rotate the rotatable arm, and wherein the respective first and/or second gripping member is configured to be moved between the open state and the gripping state via the rotatable arm. This way, a relatively compact mechanism is provided, for example a mechanism that allows the gripper to be compatible with existing gripper dimensions and/or drive units.

In an embodiment, multiple rotatable arms may be provided, wherein each rotatable arm extends towards a respective gripping member. The rotatable arms may be connected to the same longitudinal actuator. This way, both gripping members may be moved by a single actuator, to further enhance compactness of the gripper.

The rotatable arm may be rotatably connected to the rotation axis of the first and/or second gripping member. The first and/or second gripping member may be configured to be moved across the rack via the rotatable arm, whereby the pinion thereby causes a rotation of the respective gripping member. As such, the number of components required is relatively low.

In an embodiment, the first and/or second gripping member comprises two gripping surfaces arranged on opposite sides of the rotatable arm, and wherein the respective two gripping surfaces are connected to each other via the first and/or second rotation axis, respectively.

As such, multiple gripping surfaces may be provided, such that the laundry piece can be gripped over a larger surface. Therewith, forces on the fabric may be reduced and/or gripping may be performed even more certain. Additionally, this way, a relatively large amount of gripping surfaces may be driven via a single rotatable arm and/or via a single longitudinal actuator, further enhancing compactness and/or compatibility of the gripper.

According to a further aspect, the invention relates to a laundry handling system, e.g. a laundry collection or dispensing system, comprising: a textile gripper according to any of the embodiments disclosed herein; a laundry input position wherein laundry is provided to the laundry handling system and a laundry output position where laundry is outputted from the laundry handling system; and a gripper mover configured to move the textile gripper between the laundry input position and the laundry output position;
wherein a mounting section of the textile gripper is attached to the gripper mover.

The laundry input position may for example be a position where dirty laundry is deposited by a user and/or a staple of cleaned, e.g. neatly folded, laundry. The laundry output position may for example be a washing collection bucket and/or a user handover point.

The laundry handling system may be used with any embodiment of the textile gripper as disclosed herein, and therewith provide similar benefits as described herein for the textile gripper.

According to a further aspect, the invention relates to a method for gripping laundry using a textile gripper according to any of the embodiments disclosed herein, comprising the steps of: arranging the textile gripper in an open state on laundry piece; moving the first and/or second gripping member of the textile gripper into a gripping state to grip the piece of laundry; optionally, moving the textile gripper towards a laundry output position; and arranging the gripper into the open state to release the laundry piece.

The method may be used with any embodiment of the textile gripper as disclosed herein, and therewith provide similar benefits as described herein for the textile gripper.

In an embodiment, the method is performed for handling unwashed and/or dirty laundry, e.g. that is not provided in an orderly folded manner at a laundry input position.

It has been found that especially with unwashed and/or dirty laundry, friction coefficients on the fabric may vary. Further, the laundry may be provided in bulk at a laundry input position of a laundry handling system, e.g. form a container being emptied. It has been found that gripping a desired amount of laundry from the bulk, e.g. to grip a single piece of laundry to enable individual processing, may be especially challenging with grippers from the prior art, but can surprisingly be performed with a higher success ratio and/or speed using the gripper as disclosed herein.

### Brief description of drawings

Further characteristics of the invention will be explained below, with reference to embodiments, which are displayed in the appended drawings, in which:
Figure 1 schematically depicts a perspective view of a textile gripper according to an embodiment, arranged in the open state;
Figure 2 schematically depicts a perspective view of the textile gripper of Fig. 1, arranged in the gripping state;
Figure 3A schematically depicts a side view of a partial cross section of the textile gripper of Fig. 1, when arranged on a laundry piece;
Figure 3B schematically depicts a side view of a partial cross section of the textile gripper of Fig. 2, when gripping the laundry piece;
Figure 4A schematically depicts a fabric of a laundry piece when protruding elements arranged above the fabric;
Figure 4B schematically depicts an embodiment, wherein the gripping elements engage the fabric of Fig. 4A;;
Figure 4C schematically depicts another embodiment, wherein the gripping elements engage the fabric of Fig. 4A;
Figure 5A schematically depicts a side view of an embodiment of a gripping member compatible with the embodiment of Fig. 1;
Figure 5B schematically depicts a perspective view of the gripping member of Fig. 5A;
Figure 6 schematically depicts a laundry handling system according to an embodiment.

Throughout the figures, the same reference numerals are used to refer to corresponding components or to components that have a corresponding function.

### Detailed description of embodiments

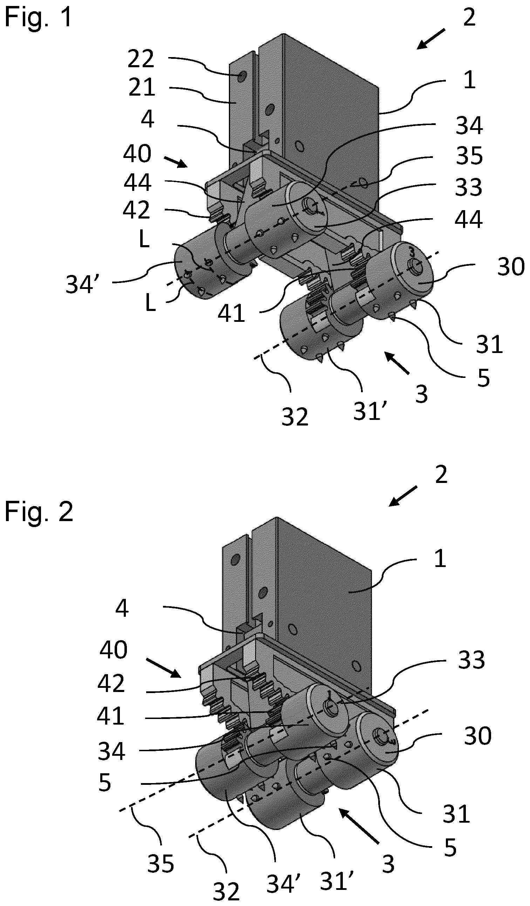

Figure 1 schematically depicts a perspective view of a textile gripper according to an embodiment, arranged in the open state. The textile gripper 1 is suited for handling laundry 99, e.g. in a laundry collection or laundry dispensing system, e.g. for picking up a piece of laundry in the input position and depositing the piece of laundry in the output position, and comprises a mounting section 2 configured to be attached to a gripper mover to move the textile gripper between at least a laundry input position G and a laundry output position O. The mounting section 2 is adapted to be compatible with mounting sections of known textile grippers in order to allow for convenient mounting and comprises a mounting surface 21 for engaging with the gripper mover, for example via a shape lock, via a snap fit, bolts, pins, glue, screws, etc and/or via a force lock, e.g. by being clamped, e.g. via bolts inserted through openings 22.

The textile gripper further comprises a gripping section 3 attached to the mounting section 2 and comprising a first gripping member 30 having a first gripping surface 30 that is rotatable about a first rotation axis 32 and a second gripping member 33 having a second gripping surface 34 that is rotatable about a second rotation axis 35; and a drive unit 4 coupled to the gripping section 3 and configured to drive the first gripping member 30 and the second gripping member 33 with respect to each other. The drive unit 4 is configured to drive both first gripping member and the second gripping member in this embodiment, but may be configured to drive one of the gripping members only, and/or two drive units may be provided.

The gripping section 3 is integral with the mounting section 2, is arranged on an opposite outer end of the gripper, and at least partially houses the drive unit 4. The gripping section may comprise a third and/or fourth gripping member.

The first gripping member 30 and the second gripping member 33 are counter-rotatable in opposite directions with respect to each other, such that the counter-rotation allows a piece of laundry 99 to be gripped between the first 31 and second 34 surfaces.

The gripping members 30, 33 are provided with one or more protruding gripping elements 5 that extend radially outwards from the first 31 and/or second 34 gripping surface, that are arranged to engage with the fabric of a laundry piece 99 and are configured to, with the counter-rotation, provide a wrinkle in the laundry 99 to be gripped between the first and second surfaces.

The gripping elements 5 protrude perpendicular from the gripping surface 31, but may also be arranged skewed thereto, e.g. a longitudinal axis of each gripping element may have an angle of 0-180 degrees with the gripping surface, for example 75-105 degrees with the gripping surface, such as approximately 90 degrees in the shown embodiment..

All of the gripping members 31, 33 are provided with multiple gripping elements 5 that are configured to, with the counter-rotation, engage, i.e. come into contact with, the piece of laundry 99 to be gripped, for example with an exposed upper surface thereof. The laundry piece is a single piece of laundry to be gripped.

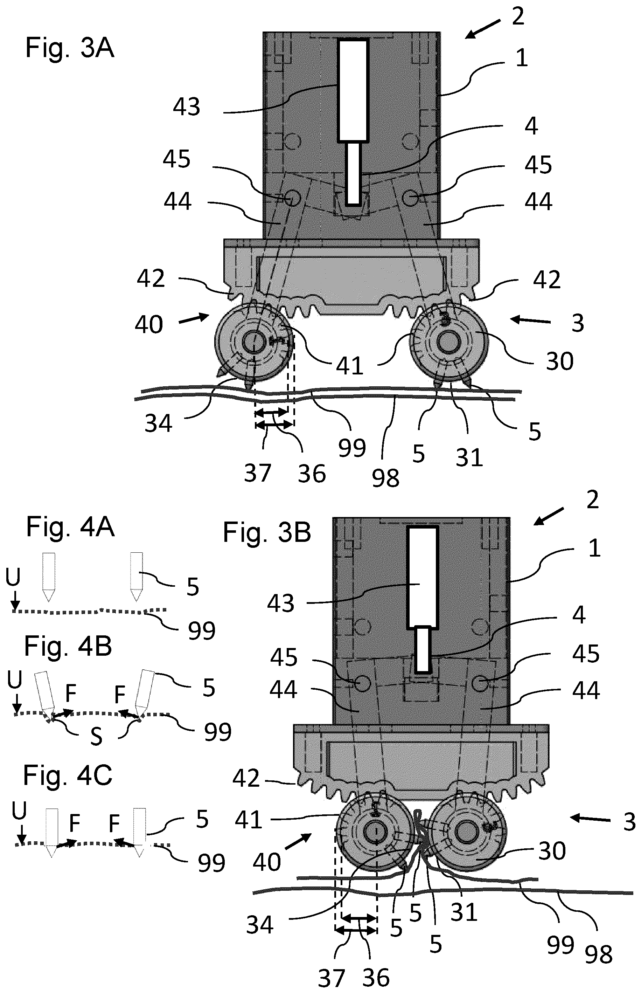

The gripping elements 5 are configured to, upon coming into contact with the laundry piece 99, exert a wrinkling force F, substantially in the plane of the fabric, i.e. acting between an upper surface and a lower surface thereof, and acting in upward direction, on the laundry piece in addition to a friction force as shown in Fig. 4B. Therewith, the gripping elements 5 are configured to deform the fabric 99 such that in the upper surface U side surface sections S are formed. The gripping elements 5 are configured to, with the counter-rotation, exert a wrinkling force on a side surface section S of the fabric, in contrast with a friction force that would normally be exerted on a top surface U of the fabric only.

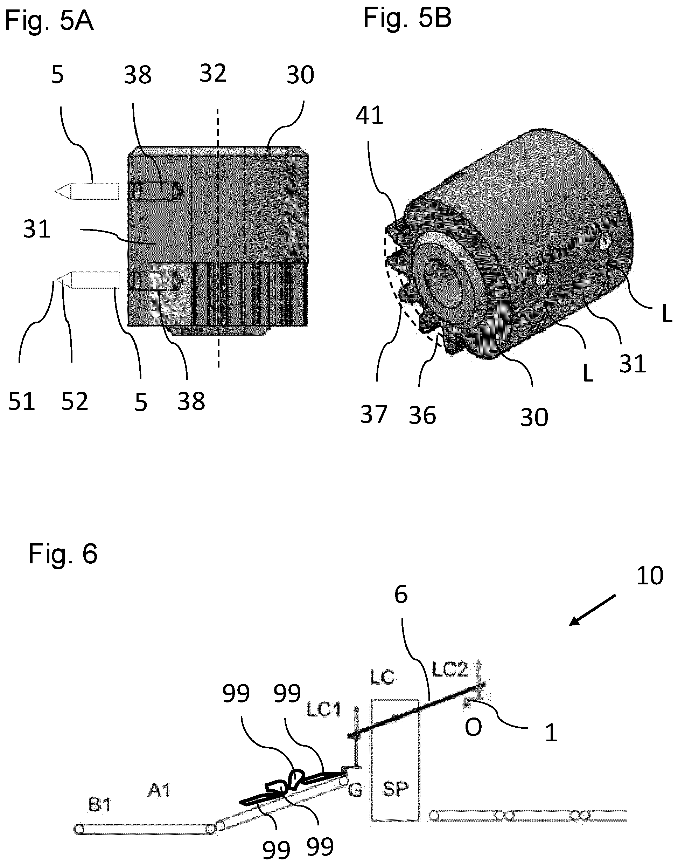

In another embodiment, as shown in Fig. 4C, the gripping elements 5 are configured to at least partially protrude into the fabric of a laundry piece 99. The gripping elements 5 comprise a pricking section 52, as depicted in Fig. 5A, configured to prick into a fabric of a laundry piece, i.e. to deform the fabric within a plane of the fabric to provide room for the gripping elements 5. It has been found that by actually protruding into the fabric, a wrinkling force may be provided from within the fabric, rather than from a side surface section S of the fabric.

The gripping elements 5 shown are substantially cylindrical and comprise a circular cross section having a relatively small outer contour. An outer diameter of the gripping elements 5 is less than 4 mm, in particular less than 2,5 mm. It has been found that such dimensions may surprisingly contribute higher chance of gripping a desired amount of laundry, e.g. to grip a single piece of laundry.

A length of the gripping elements 5 is relatively small. The gripping elements 5 are releasably attached to the gripping members 30, 33 in gripping element mounting slots 38, but may additionally or alternatively be adjustable, e.g. by varying a depth of mounting slots 38, e.g. be providing an actuator in the gripping members 30, 33.

A protruding length of the gripping elements 5 is less than 4 mm, in particular less than 2,5 mm, and a total length of the protruding elements 5 is larger than the protruding length. The gripping elements, towards their respective radial outer ends 51, comprise a pointed pricking section 52. The pointed section 52 is conical but may also be frustoconical or have another shape. A height of the pointed section is approximately equal to the protruding length, i.e. less than 4 mm, in particular less than 2,5 mm.

In addition or alternative to the shown gripping elements 5, varying cross sections, shapes and/or varying dimensions may be provided.

The first rotation axis 32 and the second rotation axis 35 are aligned with each other, in parallel. The textile gripper 1 is configured to output a gripped laundry piece at output location O by rotating the first gripping member and second gripping member in respective directions opposite to the counter-rotation. The first 31 and/or second 34 gripping surface, as also shown in Figs. 5A-5B, are substantially cylindrical. In addition to the gripping elements, the first and/or second gripping surface may comprise a coating, and/or a microscopically or macroscopically structured surface.

The drive unit 4 is configured to rotate and to move the first gripping member 30 and the second gripping member 33, but may alternatively also rotate and/or move only one of the gripping members 30, 33.

The drive unit 4 is configured to adjust a distance between the first 32 and the second 35 rotation axes during counter-rotation of the first gripping member (30) and the second gripping member (33) to move the gripper between a gripping state, as shown in Fig. 2, and an open state, as in Fig. 1, in which the respective rotation axes are arranged further away from each other than in the gripping state, in which the first and second rotation axes are arranged closest to each other and a distance between the first gripping surface 31 and the second gripping surface 34 is approximately equal to a protruding length of the gripping elements 5, in particular with the addition of a small space margin. The distance is less than 5 mm, in particular less than 4 mm in the gripping state.

The drive unit 4 is configured to adjust the distance between the first and the second rotation axes during the counter-rotation of the first gripping member and/or the second gripping member by rolling the gripping members 30, 33 with respect to the mounting section 2, such that when moving towards the gripping state, the first and/or second gripping surfaces are moved towards each other and vice versa. In particular, the drive unt 4 is configured to, when the gripper is arranged in the laundry input position on a laundry piece, move the first and second rotation axes 32, 35 towards each other while rotating, e.g. counter-rotating, the respective gripping surfaces 31, 34 in opposite directions towards each other into a gripping state and, e.g. when the gripper is arranged in the laundry output position, move the first and second rotation axes 32, 35 away from each other while rotating, e.g. counter-rotating, the respective gripping surfaces 31, 34 in opposite directions away from each other into the open state.

The drive unit 4 comprises a gear mechanism 40 arranged recessed in the first and/or second gripping member with respect to the first and/or second gripping surface, respectively, and which performs the combined counter-rotation and distance adjustment of the gripping members 30, 33. The gear mechanism 40 comprises a rack 42 and pinion 41, and moves the gripping members 30, 33 via the rack 42 and pinion 41. The rack 42 is mounted stationary to the mounting section 2, and the pinion 41 is rotatably mounted to the first 32 and/or second rotation axis 35 and coupled to the first 30 and/or second 33 gripping member to transfer a movement from the drive unit 4 towards the first 31 and/or second 34 gripping surface.

The rack 42 is curved, such that the respective gripping member 30, 33, when moving and rotating along the rack 42 with the respective pinion 41, follows a curved trajectory, e.g. such that the first 32 and/or second 35 rotation axis is configure to follow a curved trajectory when the gripper is moving between the open state and the gripping state and such that when the gripper 1 is positioned above a laundry piece, the first 30 and/or second 33 gripping members are moved towards each other and towards the laundry piece during the counter-rotation.

The drive mechanism 4 comprises a drive gear, i.e. the pinion 41, arranged adjacent to the first and/or second gripping member to drive the respective gripping member and partially recessed in the first 30 and/or second 33 gripping member with respect to the first 31 and/or second 34 gripping surface, respectively, such that an effective teeth radius 36 of the gear mechanism is smaller than an average outer radius 37 of the first and/or second gripping surface.

The gripping elements 5 protrude with respect to the drive gear 41, such that a rotation speed of the gripping elements is relatively high with respect to a rotation speed of the drive gear 41.

The first and second gripping member each comprise multiple gripping elements 5 extending from the respective gripping surface and that are arranged such that, in the gripping state, as depicted in Fig. 3B, the gripping elements of the first and second gripping member are interleaved with each other, i.e. the gripping elements 5 protruding from the second gripping member 33 are arranged in between gripping elements 5 protruding from the first gripping member 30 and/or vice versa.

At least two of the gripping elements 5, as shown in Fig. 1, are, in a rotation direction about the first 32 and/or second 35 rotation axis, arranged in line L with each other.

The gripping elements 5 are arranged in rows of in-line L gripping elements 5. The rows L are arranged next to each other in a direction parallel to the rotation axis 32, 35 are symmetrical to each other. Multiple rows, i.e. two rows L are provided on each single gripping member 30, 33, in the shown embodiments.

The drive unit 4 comprises a longitudinal actuator 43 that is rotatably mounted between the mounting section 2 and the gripping section 3, and is configured to move the first 30 and/or second gripping members 33 between the gripping state and the open state by a linear actuation movement, i.e. to change in length upon actuation. The liear actuator 43 for example comprises a hydraulic, pneumatic or electric cylinder.

The drive unit 4 comprises a rotatable arm 44 that is rotatably mounted to the gripping section 3 via the longitudinal actuator 43 and that extends towards the first 30 and/or second 33 gripping member, wherein the longitudinal actuator 43 is configured to rotate the rotatable arm 44, and wherein the respective first and/or second gripping member is configured to be moved between the open state and the gripping state via the rotatable arm. Multiple rotatable arms 44 are provided connected to the same longitudinal actuator, wherein each rotatable arm extends towards a respective gripping member 30, 33. This way, both gripping members may be moved by a single actuator, to further enhance compactness of the gripper.

The rotatable arms 44 are each rotatably connected to the rotation axis 32, 35 of the first and/or second gripping member, which are configured to be moved across the rack 42 via the rotatable arms 44, whereby the pinion 41 thereby causes a rotation of the respective gripping member.

The first 30 and second 33 gripping member each comprise two gripping surfaces 31, 31', 34, 34' arranged on opposite sides of the rotatable arm 44, and wherein the respective two gripping surfaces 34, 34', 31, 31', are connected to each other via the first and/or second rotation axis 44, respectively.

According to a further aspect, the invention relates to a laundry handling system 10 as shown in Fig. 6, e.g. a laundry collection or dispensing system, comprising a textile gripper 1 according to any of the embodiments disclosed herein; a laundry input position G wherein laundry is provided to the laundry handling system and a laundry output position O where laundry is outputted from the laundry handling system 10; and a gripper mover 6 configured to move the textile gripper between the laundry input position and the laundry output position.

In use, the gripper 1 grips a top fabric layer of a laundry piece 99 as the gripping elements protruding into the laundry piece 99, i.e. deforming the piece of laundry to be gripped. As a result, the gripping force does no longer solely depend on a friction between two relatively flat surfaces, i.e. neatly folded clothing and a roller, such as in the prior art. On the contrary, deformation of the piece of clothing to be gripped, into the surface thereof, i.e. due to the gripping elements protruding therein, now contributes to the gripping force.

It has been found that especially with unwashed and/or dirty laundry, friction coefficients on the fabric may vary. Further, the laundry may be provided in bulk at a laundry input position of a laundry handling system, e.g. form a container being emptied. It has been found that gripping a desired amount of laundry from the bulk, e.g. to grip a single piece of laundry to enable individual processing, may be especially challenging with grippers from the prior art, but can surprisingly be performed with a higher success ratio and/or speed using the gripper as disclosed herein.

### CLAUSES

Additional and/or alternative embodiments of the invention may be described as follows:
E1. Textile gripper (1) for handling laundry, e.g. in a collection or dispensing system, comprising:
   - a mounting section (2) configured to be attached to a gripper mover to move the textile gripper between at least a laundry input position and a laundry output position;
   - a gripping section (3) attached to the mounting section and comprising a first gripping member (30) having a first gripping surface (31) that is rotatable about a first rotation axis (32) and a second gripping member (33) having a second gripping surface (34) that is rotatable about a second rotation axis (35); and
   - a drive unit (4) coupled to the gripping section and configured to drive the first gripping member (30) and the second gripping member (33) with respect to each other;

   wherein the first gripping member (30) and the second gripping member (33) are counter-rotatable in opposite directions with respect to each other, such that the counter-rotation allows a piece of laundry to be gripped between the first gripping surface (31) and second gripping surface (34),
   **characterised in that** the gripping members (30, 33) are provided with one or more protruding gripping elements (5) that extend radially outwards from the first and/or second gripping surface (31, 34), that are arranged with respect to each other to engage with the fabric of a laundry piece and are configured to, with the counter-rotation, provide a wrinkle in the fabric that is gripped between the first and second surfaces.
E2. Textile gripper according to the preceding embodiment, wherein the gripping elements (5) are configured to at least partially protrude into the fabric of a laundry piece.
E3. Textile gripper according to embodiment E2, wherein the gripping elements (5), towards their respective radial outer ends (51), comprise a pointed section (52).
E4. Textile gripper according to any of the preceding embodiments, wherein the drive unit is configured to adjust a distance between the first rotation axis (32) and the second rotation axis (35) to move the gripper between a gripping state, in which the first and second rotation axes are arranged closest to each other, and an open state, in which the respective rotation axes are arranged further away from each other.
E5. Textile gripper according to the preceding embodiment, wherein the drive unit (4) is configured to adjust the distance between the first rotation axis (32) and the second rotation axis (35) during the counter-rotation of the first gripping member (30) and/or the second gripping member (34), such that when moving towards the gripping state, the first and/or second gripping surfaces are moved towards each other and vice versa.
E6. Textile gripper according to any of the preceding embodiments, wherein the drive unit (4) comprises a gear mechanism (40) comprising a drive gear (41) arranged adjacent to the first gripping member (30) and/or the second gripping member (33) to drive the respective gripping member, wherein the drive gear is partially recessed in the first and/or second gripping member with respect to the first gripping surface (31) and/or the second gripping surface (34), respectively, such that an effective teeth radius (36) of the gear mechanism is smaller than an average outer radius (37) of the first gripping surface (31) and/or the second gripping surface (34).
E7. Textile gripper according to any of the preceding embodiments, wherein the drive unit (4) comprises a rack (42) and pinion (41), and wherein the drive unit is configured to move the first gripping member (30) and/or the second gripping member (33) via the rack and pinion.
E8. Textile gripper according to the preceding embodiment, wherein the rack (42) is mounted stationary to the mounting section (2), and wherein the pinion (41) is rotatably mounted to the first rotation axis (32) and/or to the second rotation axis (35) and coupled to the first gripping member (30) and/or to the second gripping member (34), respectively, to transfer a movement from the drive unit (4) towards the first gripping surface (31) and/or to the second gripping surface (34).
E9. Textile gripper according to any of the preceding embodiments, wherein the first gripping member (30) and/or the second gripping member (33) comprise multiple gripping elements (5) extending from the respective gripping surface.
E10. Textile gripper according to any of the preceding embodiments, wherein the gripping elements (5) are arranged such that, in the gripping state, the gripping elements of the first gripping member (30) and the second gripping member (33) are interleaved with each other.
E11. Textile gripper according to the preceding embodiment, wherein at least two of the gripping elements (5) are, in a rotation direction about the first rotation axis (32) and/or the second rotation axis (35), arranged in line (L) with each other.
E12. Textile gripper according to any of the preceding embodiments, wherein the drive unit (4) comprises a longitudinal actuator (43) that is rotatably mounted between the mounting section (2) and the gripping section (3), wherein the drive unit is configured to move the first gripping member (31) and/or the second gripping member (34) between the gripping state and the open state by actuation of the longitudinal actuator (43).
E13. Textile gripper according to the preceding embodiment, wherein the drive unit comprises a rotatable arm (44) that is rotatably mounted to the gripping section via the longitudinal actuator (43) and that extends towards the first gripping member (30) and/or the second gripping member (33), wherein the longitudinal actuator (43) is configured to rotate the rotatable arm, and wherein the respective first gripping member and/or the second gripping member is configured to be moved between the open state and the gripping state via the rotatable arm.
E14. Textile gripper according to any of the preceding embodiments, wherein the first gripping member (30) and/or the second gripping member (33) comprises two gripping surfaces (31, 31', 34, 34') arranged on opposite sides of the rotatable arm (44), and wherein the respective two gripping surfaces (31, 31', 34, 34') are connected to each other via the first and/or second rotation axis, respectively.
E15. Laundry handling system (10), e.g. a laundry collection or dispensing system, comprising:
   - a textile gripper (1) according to any of the preceding claims;
   - a laundry input position (G) wherein laundry is provided to the laundry handling system and a laundry output position (O) where laundry is outputted from the laundry handling system (10); and
   - a gripper mover (6) configured to move the textile gripper between the laundry input position and the laundry output position;
   wherein a mounting section of the textile gripper is attached to the gripper mover.
E16. Method for gripping laundry using a textile gripper (1) according to any of the preceding embodiments, comprising the steps of:
   - arranging the textile gripper in an open state on a laundry piece (99);
   - moving the first gripping member (31) and/or the second gripping member (33) of the textile gripper into a gripping state to grip the piece of laundry;
   - optionally, moving the textile gripper (1) towards a laundry output position (O); and
   - arranging the gripper into the open state to release the laundry piece.
E17. Method according to the preceding claim for handling unwashed and/or dirty laundry (99), e.g. that is not provided in an orderly folded manner at a laundry input position.

## Claims

1. Textile gripper (1) for handling laundry, e.g. in a collection or dispensing system, comprising:
- a mounting section (2) configured to be attached to a gripper mover to move the textile gripper between at least a laundry input position and a laundry output position;
- a gripping section (3) attached to the mounting section and comprising a first gripping member (30) having a first gripping surface (31) that is rotatable about a first rotation axis (32) and a second gripping member (33) having a second gripping surface (34) that is rotatable about a second rotation axis (35); and
- a drive unit (4) coupled to the gripping section and configured to drive the first gripping member (30) and the second gripping member (33) with respect to each other;
wherein the first gripping member (30) and the second gripping member (33) are counter-rotatable in opposite directions with respect to each other, such that the counter-rotation allows a piece of laundry to be gripped between the first gripping surface (31) and second gripping surface (34),
**characterised in that** the gripping members (30, 33) are provided with one or more protruding gripping elements (5) that extend radially outwards from the first and/or second gripping surface (31, 34), that are arranged with respect to each other to engage with the fabric of a laundry piece and are configured to, with the counter-rotation, provide a wrinkle in the fabric that is gripped between the first and second surfaces,
wherein the drive unit is configured to, during the counter-rotation, adjust a distance between the first rotation axis (32) and the second rotation axis (35) to move the gripper between a gripping state, in which the first and second rotation axes are arranged closer to each other, and an open state, in which the respective rotation axes are arranged further away from each other.

2. Textile gripper according to the preceding claim, wherein the gripping elements (5) are configured to at least partially protrude into the fabric of a laundry piece.

3. Textile gripper according to claim 2, wherein the gripping elements (5), towards their respective radial outer ends (51), comprise a pointed section (52).

4. Textile gripper according to the preceding claim, wherein the drive unit (4) is configured to adjust the distance between the first rotation axis (32) and the second rotation axis (35) during the counter-rotation of the first gripping member (30) and/or the second gripping member (34), such that when moving towards the gripping state, the first and/or second gripping surfaces are moved towards each other and vice versa.

5. Textile gripper according to any of the preceding claims, wherein the drive unit (4) comprises a gear mechanism (40) comprising a drive gear (41) arranged adjacent to the first gripping member (30) and/or the second gripping member (33) to drive the respective gripping member, wherein the drive gear is partially recessed in the first and/or second gripping member with respect to the first gripping surface (31) and/or the second gripping surface (34), respectively, such that an effective teeth radius (36) of the gear mechanism is smaller than an average outer radius (37) of the first gripping surface (31) and/or the second gripping surface (34).

6. Textile gripper according to any of the preceding claims, wherein the drive unit (4) comprises a rack (42) and pinion (41), and wherein the drive unit is configured to move the first gripping member (30) and/or the second gripping member (33) via the rack and pinion.

7. Textile gripper according to the preceding claim, wherein the rack (42) is mounted stationary to the mounting section (2), and wherein the pinion (41) is rotatably mounted to the first rotation axis (32) and/or to the second rotation axis (35) and coupled to the first gripping member (30) and/or to the second gripping member (34), respectively, to transfer a movement from the drive unit (4) towards the first gripping surface (31) and/or to the second gripping surface (34).

8. Textile gripper according to any of the preceding claims, wherein the first gripping member (30) and/or the second gripping member (33) comprise multiple gripping elements (5) extending from the respective gripping surface.

9. Textile gripper according to any of the preceding claims, wherein the gripping elements (5) are arranged such that, in the gripping state, the gripping elements of the first gripping member (30) and the second gripping member (33) are interleaved with each other.

10. Textile gripper according to the preceding claim, wherein at least two of the gripping elements (5) are, in a rotation direction about the first rotation axis (32) and/or the second rotation axis (35), arranged in line (L) with each other.

11. Textile gripper according to any of the preceding claims, wherein the drive unit (4) comprises a longitudinal actuator (43) that is rotatably mounted between the mounting section (2) and the gripping section (3), wherein the drive unit is configured to move the first gripping member (31) and/or the second gripping member (34) between the gripping state and the open state by actuation of the longitudinal actuator (43).

12. Textile gripper according to the preceding claim, wherein the drive unit comprises a rotatable arm (44) that is rotatably mounted to the gripping section via the longitudinal actuator (43) and that extends towards the first gripping member (30) and/or the second gripping member (33), wherein the longitudinal actuator (43) is configured to rotate the rotatable arm, and wherein the respective first gripping member and/or the second gripping member is configured to be moved between the open state and the gripping state via the rotatable arm.

13. Textile gripper according to any of the preceding claims, wherein the first gripping member (30) and/or the second gripping member (33) comprises two gripping surfaces (31, 31', 34, 34') arranged on opposite sides of the rotatable arm (44), and wherein the respective two gripping surfaces (31, 31', 34, 34') are connected to each other via the first and/or second rotation axis, respectively.

14. Laundry handling system (10), e.g. a laundry collection or dispensing system, comprising:
- a textile gripper (1) according to any of the preceding claims;
- a laundry input position (G) wherein laundry is provided to the laundry handling system and a laundry output position (O) where laundry is outputted from the laundry handling system (10); and
- a gripper mover (6) configured to move the textile gripper between the laundry input position and the laundry output position;
wherein a mounting section of the textile gripper is attached to the gripper mover.

15. Method for gripping laundry using the textile gripper (1) according to any of the preceding claims 1-13, comprising the steps of:
- arranging the textile gripper in an open state on a laundry piece (99);
- moving the first gripping member (31) and/or the second gripping member (33) of the textile gripper into a gripping state to grip the piece of laundry;
- optionally, moving the textile gripper (1) towards a laundry output position (O); and
- arranging the gripper into the open state to release the laundry piece.
for example wherein the method is performed for handling unwashed and/or dirty laundry (99), e.g. that is not provided in an orderly folded manner at a laundry input position.
